(19) Europäisches Patentamt / European Patent Office / Office européen des brevets

(11) **EP 4 633 150 A1**

(12) **EUROPEAN PATENT APPLICATION**

(43) Date of publication:
**15.10.2025 Bulletin 2025/42**

(21) Application number: **24305567.0**

(22) Date of filing: **08.04.2024**

(51) International Patent Classification (IPC):
**H04N 19/117** *(2014.01)*   **H04N 19/147** *(2014.01)*
**H04N 19/174** *(2014.01)*   **H04N 19/176** *(2014.01)*
**H04N 19/19** *(2014.01)*   **H04N 19/82** *(2014.01)*

(52) Cooperative Patent Classification (CPC):
**H04N 19/19; H04N 19/117; H04N 19/147;
H04N 19/174; H04N 19/176; H04N 19/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BOISSON, Guillaume
35137 PLEUMELEUC (FR)**

• **GALPIN, Franck
35235 THORIGNE-FOUILLARD (FR)**
• **BORDES, Philippe
35890 LAILLE (FR)**
• **LE LEANNEC, Fabrice
35830 BETTON (FR)**
• **LEFEBVRE, Frederic
35000 RENNES (FR)**
• **MARZUKI, Ismail
MONTREAL, H3J 1V4 (CA)**

(74) Representative: **Interdigital
Immeuble ZEN 2
845 A, avenue des Champs Blancs
35510 Cesson-Sévigné (FR)**

(54) **METHOD AND APPARATUS FOR ENCODING RESPONSIVE TO A LAGRANGIAN RATE-DISTORTION COST MODIFIED FOR ADAPTIVE LOOP FILTERING**

(57)    In various implementations, method and devices are disclosed that involves video encoding based on a Lagrangian rate-distortion cost using a Lagrangian parameter. In a variant, a set of coding modes responsive to a Lagrangian rate-distortion cost comprises an adaptive in-loop filtering mode and wherein determining an adaptive in-loop filtering mode based on a Lagrangian rate-distortion cost using a Lagrangian parameter further comprises modifying a Lagrangian parameter for determining the adaptive in-loop filtering mode.

FIG. 10

EP 4 633 150 A1

**Description**

TECHNICAL FIELD

The present embodiments generally relate to a method and an apparatus for video encoding responsive lagrangian rate-distortion cost modified for adaptive loop filtering.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction. To reduce encoding artifacts, in-loop filters, for example deblocking filter, SAO (Sample Adaptive Offset), Adaptive Loop Filter), are applied to the reconstructed picture.

SUMMARY

In various implementations, methods and devices are disclosed that adjust a lagrangian rate-distortion cost for adaptive loop filtering.
According to a first aspect, a method of video encoding is disclosed that comprises determining a set of coding modes for encoding video image data based on a lagrangian rate-distortion cost using a lagrangian parameter and responsive to the determining of the set of coding modes, encoding video image data and related syntax. For instance, the set of coding modes comprises an adaptive in-loop filtering mode and the method further comprises determining an adaptive in-loop filtering mode based on a lagrangian rate-distortion cost using a lagrangian parameter that is modified for determining the adaptive in-loop filtering mode.
One or more embodiments also provide an apparatus for encoding video comprising one or more processors and at least one memory coupled to said one or more processors, wherein said one or more processors are configured to perform the encoding method according to any of the embodiments described herein.
One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding a video according to the methods described herein.
One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates an embodiment of in-loop filters such as in VVC in-loop-filtering method.

FIG. 5 illustrates an embodiment of in-loop filters according to an enhancement of in-loop-filtering method.

FIG. 6 illustrates example ALF filter shapes.

FIG. 7 illustrates another embodiment of in-loop filters according to an enhancement of in-loop-filtering method.

FIG. 8 illustrates example filter shape of a signaled filter using residual samples as additional inputs.

FIG. 9 illustrates a RDO method for deciding to signal or not value(s) of ALF syntax according to an embodiment.

FIG. 10 illustrates a method for video encoding wherein a Lagrangian multiplier is modified for a whole ALF RDO according to an embodiment.

FIG. 11, FIG.12, FIG. 13 and FIG. 14 illustrate a method for video encoding wherein a Lagrangian multiplier is modified for one or more steps of ALF RDO according to various embodiments.

FIG. 15 illustrates a method for video encoding wherein a Lagrangian multiplier is modified for ALF RDO depending on some constraints to various embodiments.

DETAILED DESCRIPTION

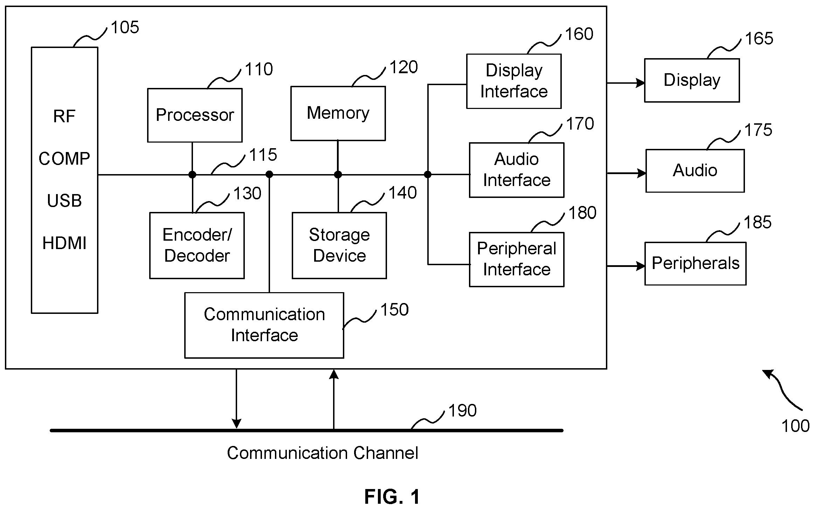

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

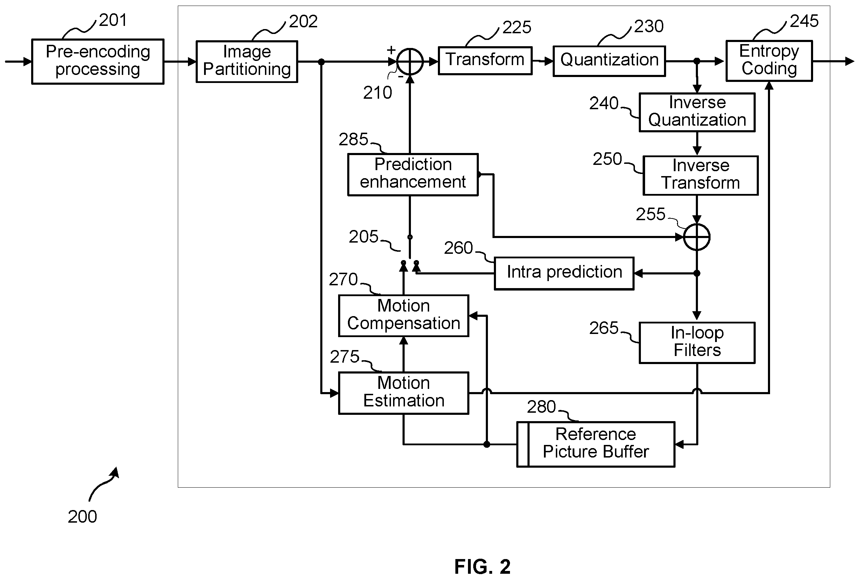

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream (for example in the form of supplemental enhancement information (SEI) messages, for AVC, HEVC, and VVC standards).

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored at a reference picture buffer (280).

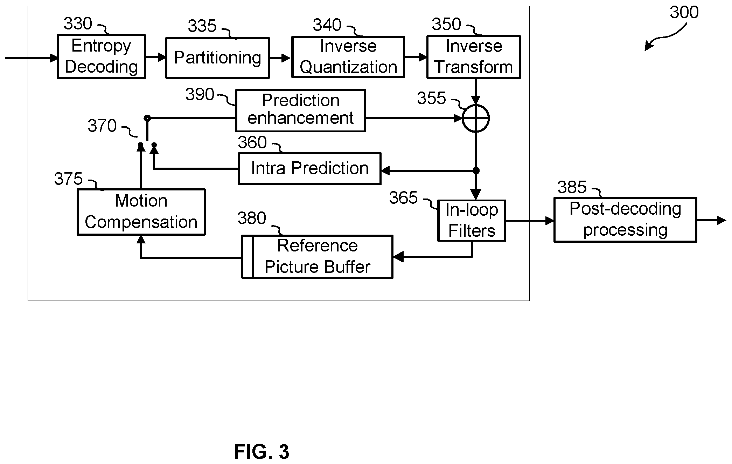

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380). Indeed, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing VVC (Versatile Video Coding) standard and VSEI specification.

Feature(s) associated with in-loop filtering are provided herein.

Block-based intra/inter prediction and transform coding, together with residues quantization, induce a variety of artifacts at medium and low bitrates. In order to reduce those artifacts, video coding standards, such as VVC, and state-of-the-art video coding solutions, such as ECM, implement in-loop filters, such as deblocking filtering (DBF), Bilateral filtering (BIF), Sample-adaptive offset (SAO) and Adaptive loop filtering (ALF).

Deblocking filter (DBF) aims at smoothing discontinuities that may appear along block boundaries. Sample-adaptive offset (SAO) is designed to attenuate artifacts occurring around edges and correct the local average intensity changes (e.g. banding artifacts) with offsets signaled in the bitstream. Bilateral filter (BIF) aims at denoising further reconstructed pictures from artifacts induced from quantization in the Transform domain. Adaptive loop filters (ALF) are determined at encoder side as optimal filters according to a rate-distortion criterion. ALF filters are transmitted along with the bitstream, then retrieved and used at decoder side.

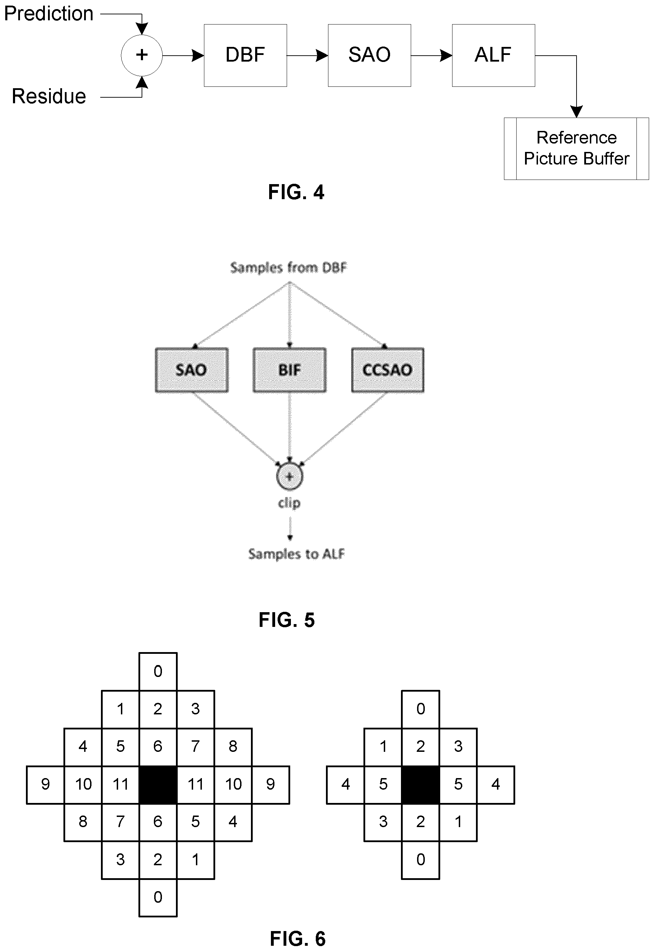

The VVC standard implements three kinds of in-loop filters: deblocking filter (DBF), Sample-adaptive offset (SAO), and Adaptive loop filter (ALF). FIG. 4 illustrates an embodiment of in-loop filters such as in VVC in-loop-filtering method. As mentioned above, the deblocking filter aims at reducing blocking discontinuities and sample-adaptive offset mostly aims at reducing artifacts resulting from the quantization of transform coefficients. Adaptive loop filter and Cross-component adaptive loop filter are adaptive filters enabling to enhance the reconstructed signal, using for instance Wiener-filter encoding approaches. If local deblocking conditions are met, Luma and Chroma reconstructed samples located along block boundaries are first filtered with deblocking filters (DBF). Then offsets are added locally depending on a classification based on band-classifier or edge-classifier with Sample-adaptive offset (SAO). Eventually, Adaptive-loop filters (ALF) and its variant Cross-component Adaptive loop filters (CCALF) are applied before storing the resulting sample values in the Reference Picture buffer.

FIG. 5 illustrates an embodiment of in-loop filters according to an enhancement of in-loop-filtering method, for instance implemented in ECM. Indeed, further loop filters were introduced in Enhanced Compression Model (ECM) software, the Bilateral filtering (BIF) and the Cross-component Sample adaptive offset (CCSAO). Both are carried out in the same loop-filter stage as SAO, and, like SAO, use samples from deblocking as input, as shown in FIG. 5. BIF offset is computed based on a 5x5 diamond, using coefficients to be fetched in precomputed look-up table, depending on QP and on the difference between the values of the neighbor sample and of the sample to be filtered. BIF is processed independently and in a similar way on Luma and on Chroma components. CCSAO is used to refine reconstructed samples. Similarly to SAO, CCSAO classifies the reconstructed samples into different categories, derives one offset for each category and adds the offset to the reconstructed samples in that category. Whereas SAO uses a single component of current sample as input, CCSAO utilizes all three components to classify the current sample into different color bands. SAO, BIF and CCSAO offsets are computed in parallel, added to the reconstructed samples and jointly clipped, before proceeding to ALF, as shown in FIG. 5.

Feature(s) associated with ALFs are provided herein.

An ALF may be based on adaptive filters. Adaptive filters may be applied to reduce the mean squared error (MSE) between the original and the reconstructed samples. For example, adaptive filters may be applied to reduce the mean squared error (MSE) between the original and the reconstructed samples using Wiener-based filtering. An ALF may be the last post-filter applied to the output of sample adaptive offset (SAO). ALF filters coefficients may be transmitted in the bitstream and decoded at decoder side, before being applied on reconstructed samples. Pre-trained ALF filters coefficients may also be hard-coded both at encoder and decoder sides.

An ALF may include a classification of non-overlapping sub-blocks (e.g., based on local sample gradients of the sub-blocks). For a class (e.g., each class), a specific filter may be applied (e.g., from among the different filters signaled in the bitstreams). Based on the classification, a geometric transformation of coefficients within a filter shape (e.g., 90-degree rotation, diagonal or vertical flip, etc.) may be applied.

FIG. 6 illustrates example ALF filter shapes. One or more (e.g., two) filter shapes (e.g., $7 \times 7$ diamond shape and/or $5 \times 5$ diamond shape) may be used for Luma and Chroma components (e.g., a $7 \times 7$ diamond shape for Luma components and/or $5 \times 5$ diamond shape for Chroma components, as shown in FIG. 6). A square (e.g., each square) may correspond to a Luma or a Chroma sample. The center square may denote the current to-be-filtered sample. To reduce the signaling overhead and/or the number of multiplications, the filter coefficients may use point-symmetry. For example, as shown on the left of FIG. 6, a $5 \times 5$ diamond may be used for Chroma components. As shown on the right of FIG. 6, a $7 \times 7$ diamond may be used for Luma components.

An integer filter coefficient (e.g., each integer filter coefficient), $c_i$, may be represented with n-bit fractional precision. DC may denote the lowest frequency of a signal (e.g., an average of the signal). DC neutrality may be preserved. For example, preserving DC neutrality may indicate that a filter will preserve the average of the signal. To preserve DC neutrality, the sum of coefficients of one filter may be (e.g., must be) equal to 128 = 1 « $n$.

$$2\left(\sum_{i=0}^{N-2} c_i\right) + c_{N-1} = 128 \tag{1}$$

In an example, n may be equal to 7.

In Eq. (1), the number of coefficients, N, may be equal to 13 for a 7x7 filter shape. In Eq. (1), the number of coefficients, N, may be equal to 7 for a 5x5 filter shape.

Feature(s) associated with linear filtering are provided herein.

A filtered sample value $\overline{R}(x, y)$ may be obtained (e.g., because of point-symmetry and DC neutrality) by adding the reconstructed sample $R(x, y)$ and a weighted sum of the differences between the to-be-filtered sample $R(x, y)$ and its neighboring samples:

$$\bar{R}(x,y) = R(x,y) + \left(\left[\sum_{i=0}^{N-2} c_i \times (\Delta R_i^+ + \Delta R_i^-)\right] + 64\right) \gg 7 \qquad (2)$$

with:

$$\Delta R_i^+ = R(x + x_i, y + y_i) - R(x,y)$$
$$\Delta R_i^- = R(x - x_i, y - y_i) - R(x,y) \qquad (3)$$

where $(x + x_i, y + y_i)$ and $(x - x_i, y - y_i)$ are the coordinates of the reconstructed samples corresponding to the i-th coefficient $c_i$ (e.g., point symmetry).

Feature(s) associated with non-linear filtering are provided herein.

If non-linear ALF is enabled, Eq. (2) may be modified as follows:

$$\bar{R}(x,y) = R(x,y) + \left[\sum_{i=0}^{N-2} c_i \times (f_i^+ + f_i^-) + 64\right] \gg 7 \qquad (4)$$

with:

$$f_i^+ = \min\left(b_i, \max\left(-b_i, R(x + x_i, y + y_i) - R(x,y)\right)\right)$$
$$f_i^- = \min\left(b_i, \max\left(-b_i, R(x - x_i, y - y_i) - R(x,y)\right)\right) \qquad (5)$$

where $b_i$ is the clipping parameter for the coefficient $c_i$. The clipping parameter $b_i$ may be determined based on a clipping index $d_i$. For example, the clipping parameter $b_i$ may be derived as follows:

$$b_i = \begin{cases} 2^{BD} & \text{when } d_i = 0 \\ 2^{BD-1-2d_i} & \text{otherwise} \end{cases} \qquad (6)$$

where $BD$ denotes the sample bit depth. In examples, $d_i$ may be 0, 1, 2 or 3.

Feature(s) associated with integer arithmetic of the filtering are provided herein.

Let NUM_BITS denote the number of bits used to represent ALF filter coefficients $c_i$ as signed integers. ALF filtering operations are implemented as follows:

$$\bar{R}(x,y) = R(x,y) + \left[\left(\left[\sum_{i=0}^{N-2} c_i \times (f_i^+ + f_i^-)\right] + \text{offset}\right) \gg \text{shift}\right] \qquad (7)$$

where

$$\text{shift} = \text{NUM\_BITS} - 1 \qquad (8)$$

and

$$\text{offset} = 1 \gg (\text{shift} - 1) \qquad (9)$$

Feature(s) associated with on-line filter optimization and off-line pre-training are provided herein.

ALF filter coefficients and clipping indices may be determined at encoder side, for instance by solving Wiener-Hopf equations to minimize the MSE between reconstructed samples and their original values. If a rate-distortion condition is met, these coefficients and, if applicable, the corresponding clipping indices, may be encoded in an Adaptation Parameter Set (APS). In VVC, an ALF APS may contain one Luma filter set and up to 8 Chroma filters. VVC also allows the usage of pre-trained (pre-defined) Luma filters that are hard-coded both at encoder and decoder side.

Feature(s) associated with luma sub-block classification are provided herein.

Filter adaptation at sub-block level may apply (e.g., only apply) to Luma. A sub-block (e.g., each sub-block, for example, 4×4) may be classified based on the sub-block's directionality (D) and/or Laplacian activity (A).

The activity value $A$ may be mapped to the range of 0 to 4, inclusively. The quantized value may be denoted as $\hat{A}$. A Luma sub-block (e.g., each Luma sub-block) may be categorized into a class. For example, a Luma sub-block may be categorized into a class of the 25 classes represented by:

$$C = 5D + \hat{A} \qquad (10)$$

A class (e.g., each class) may have an assigned filter (e.g., its own filter assigned). ALF for Luma therefore relies on filter sets, that is a plurality of filters that comes together with a mapping list, each class of the classification being associated with a specific filter of the filter set. Classification may not be applied for Chroma.

A number of pre-trained Luma filter sets may be available at encoder and decoder side. The encoder may choose according to a rate-distortion criterion whether it shall transmit the Luma filter set that has been optimized for the current slice/frame.

Feature(s) associated with geometric transformations are provided herein.

A geometric transformation (e.g., a rotation or diagonal and/or vertical flipping) may be applied to the filter coefficients (e.g., before filtering each Luma sub-block). The geometric transformation may be applied, for example, depending on the sub-block gradient values. The geometric transformation may align the directionally of the different blocks (e.g., to reduce the number of ALF classes). For example, applying the geometric transformation may allow a sub-block with a horizontal edge and a sub-block with a vertical edge to both have the same directionality D.

Feature(s) associated with coding tree block (CTB)-level filter selection are provided herein. Adaptive loop filtering may involve filter adaptation at the CTB level (e.g., in addition to the Luma sub-block-level classification).

A Luma CTB may use a filter set calculated for the current slice. A Luma CTB may use a filter set (e.g., one of the filter sets) calculated for the already-coded slices. A Luma CTB may use an offline trained filter set (e.g., from N offline trained filter sets, for example, where N = 16). Within a Luma CTB (e.g., each Luma CTB), a filter (e.g., from the chosen filter set) to be applied to a sub-block (e.g., each sub-block) may be determined based on the class C calculated in Eq. (10) for the block.

Chroma may use (e.g., only use) CTB-level filter adaptation. One or more (e.g., up to 8) filters may be used for Chroma components in a slice. A CTB (e.g., each CTB) may select one of the filters.

ALF developments may be unstandardized. Feature(s) associated with a classifier (e.g., a new classifier) and fixed filtering for Luma are provided herein.

A classifier may be based on Luminance bands. C0 may denote the legacy Laplacian-based classifier. C1 may denote the classifier (e.g., the band classifier) based on Luminance bands.

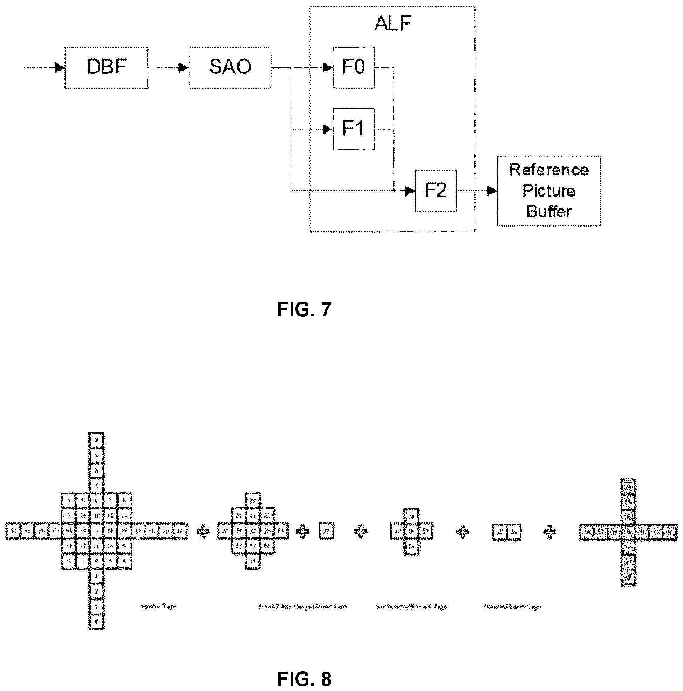

FIG. 7 illustrates another embodiment of in-loop filters according to an enhancement of in-loop-filtering method. One or more (e.g., three) different sets of filters (e.g., F0, F1 and F2) may be used to filter a Luma sample. Sets F0 and F1 may include fixed filters (e.g., filters with coefficients trained for classifiers C0 and C1). Coefficients of filters in set F2 may be signaled. In an example, $R_0(x, y)$ and $R_1(x, y)$ may denote the intermediate sample values filtered by F0 and F1, respectively. The filter F2 may be applied to $R_0(x, y)$, $R_1(x, y)$, and the neighboring samples to derive a final filtered sample. For example, the final filtered sample may be represented as:

$$\bar{R}(x, y) = R(x, y) + \left[ \sum_{i=0}^{19} c_i \times (f_i^+ + f_i^-) \right] + \left[ \sum_{i=20}^{21} c_i \times g_i \right] \qquad (11)$$

where $f_i^{+/-}$ denotes the clipped difference between a neighboring sample and $R(x, y)$, and $g_i$ denotes the clipped difference between $R_{20-i}(x, y)$ and a current sample value.

F0 and F1 may be pre-learned filters trained on classifiers C0 and C1, respectively. F2 may be signaled. F2 may use either classifier C0 or C1. The filter coefficients $(c_i)_{0 \le i \le 21}$ may be signaled.

FIG. 8 illustrates an example filter shape of the signaled filter F2. Filter shapes and sizes may be changed. Samples may be considered before deblocking in the signaled filter, as illustrated in FIG. 8.

Signaled filter input may be diversified. For example, filter input may be diversified with collocated samples in reference pictures, pre-DBF reconstructed samples, or residual samples. A classifier based on residue L1 may be used.

Feature(s) associated with classification based fixed filtering for Luma are provided herein.

Two Laplacian-based classifiers (one for each classification-based fixed filter) may be applied to a 2x2 block. In each classifier, activity and directionality values may be derived based on vertical, horizontal, and diagonal gradients using a window surrounding each 2x2 block. For each 2x2 block, the mean value of a surrounding window is calculated. Then, for each sample of this window, the difference between the sample value and the mean value is calculated. A scaling factor is determined based on the activity value derived from a Laplacian classifier. The square root of the sum of the squared differences is further quantized to C' by a scaling factor. The value of C' is an integer between 0 and 7, inclusively. Let $C_i$ denote the class index provided by the 896-class Laplacian classifier of i-th fixed filter, based on the activity and directionality values. The final class index $C'_i$ is derived as:

$$C'_i = C' \times 896 + C_i \tag{12}$$

Two double diamond-shaped fixed filters are selected from the two fixed filter sets by using the derived two class indices $C'_0$ and $C'_1$. The first fixed filter $f_0$ is applied to sample values before DBF and ALF input, with an 13x13 diamond applying on ALF input and an additional 9x9 diamond applying to sample values before DBF. The second fixed filter $f_1$ is applied to output of $f_0$ and sample values before DBF, using a 9x9 diamond on each.

Feature(s) associated with Gaussian fixed filter are provided herein.

A third Luma fixed filter with a shape of diamond 7x7 is used, without classification. This fixed filter is referred to as the Gaussian fixed filter.

Feature(s) associated with signaled Luma filtering are provided herein.

After fixed filtering, a signaled Luma filter is applied to the ALF input samples, samples before the deblocking filter (DBF), outputs of the two classifications-based fixed filters, output of the Gaussian fixed filter and the residual data.

The value of a final Luma filtered sample is computed as follows:

$$\tilde{R}(x,y) = R(x,y) + \left[\sum_{i=0}^{19} c_i(f_i^+ + f_i^-)\right] + \left[\sum_{i=20}^{25} c_i(g_{0,i}^+ + g_{0,i}^-)\right] + \left[\sum_{i=26}^{27} c_i(h_i^+ + h_i^-)\right]$$

$$+ \left[\sum_{i=28}^{33} c_i(g_{2,i}^+ + g_{2,i}^-)\right] + \left[\sum_{i=34}^{34} c_i g_{0,1}\right] + \left[\sum_{i=35}^{35} c_i g_{1,i}\right] + \left[\sum_{i=36}^{36} c_i h_i\right] \tag{13}$$

$$+ \left[\sum_{i=37}^{37} c_i r_i\right] + \left[\sum_{i=38}^{38} c_i rFiltered_i\right] + \left[\sum_{i=39}^{39} c_i g_{2,i}\right]$$

where $f_i^{\pm}$ is the clipped difference between a neighboring sample and the current sample $R(x,y)$, $g_{0,i}^{\pm}$ is the clipped difference between an intermediate sample generated from the first fixed filter and the current sample $R(x,y)$, $g_{2,i}^{\pm}$ is the clipped difference between an intermediate sample generated from the third fixed filter and the current sample $R(x, y)$, $g_{0,34}$ is the clipped difference between the collocated intermediate sample generated from first fixed filter and the current sample R(x,y), $g_{1,35}$ is the clipped difference between the collocated intermediate sample generated from second fixed filter and the current sample R(x,y), $g_{2,39}$ is the clipped difference between the collocated intermediate sample generated from third fixed filter and the current sample $R(x,y)$, $h_i^{\pm}$ is the clipped difference between a neighboring sample before DBF and the current sample $R(x, y)$, $h_{36}$ is the clipped difference between the collocated sample before DBF and the current sample R(x,y), and where $r_{37}$ is the clipped neighboring residual sample value and $rFiltered_{38}$ is the clipped residual sample filtered by a fixed-filter. For residual samples, the fixed filter used is a fixed filter from the first fixed filter set. The complete filter shape of ALF using residual samples as additional inputs is shown in FIG. 8.

Luma classification is extended with an additional alternative classifier. For a signaled Luma filter set, a flag is signaled to indicate whether the alternative classifier is applied. Geometrical transformation is not applied to the alternative band classifier. When the band-based classifier is applied, the sum of sample values of a 2x2 luma block is calculated at first. Then the class index is calculated as below:

$$class\_index = (sum * 25) >> (sample\ bit\ depth + 2) \tag{14}$$

Feature(s) associated with ALF syntax are provided herein.

Filter coefficients and/or clipping indices may be carried in one or more ALF adaptation parameter sets (APSs). An ALF APS may include one or more (e.g., up to 8) Chroma filters and/or one or more (e.g., up to 4) Luma filter sets (e.g., with up to 25 filters). An index $i_C$ may be included for each Luma class (e.g., each of the 25 Luma classes). Classes having the same index $i_C$ may share the same filter. By merging different classes, the number of bits used (e.g., required) to represent the filter coefficients may be reduced. A decoder may reference one or more ALF APSs (e.g., up to 8). Because of decoding dependencies, only APSs of lower temporal ID (TID) and APSs of lower picture index (POC) in the same TID are accessible as shown in Table 1 below.

| #POC | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|---|---|---|---|---|---|---|---|---|---|---|---|---|---|---|---|
| TID0 | I0 | | | | | | | | | | | | | | | | | | | | | | | | | | | | | | | | P0 |
| TID1 | | | | | | | | | | | | | | | | | B1 | | | | | | | | | | | | | | | | |
| TID2 | | | | | | | | | B2 | | | | | | | | | | | | | | | | B2 | | | | | | | | |
| TID3 | | | | | B3 | | | | | | | | B3 | | | | | | | | B3 | | | | | | | | B3 | | | | |
| TID4 | | | B4 | | | | B4 | | | | B4 | | | | B4 | | | | B4 | | | | B4 | | | | B4 | | | | B4 | | |
| TID5 | | B5 | | B5 | | B5 | | B5 | | B5 | | B5 | | B5 | | B5 | | B5 | | B5 | | B5 | | B5 | | B5 | | B5 | | B5 | | B5 | |

*Table 1: Example of GOP structure: picture type (I: Intra – P: Predicted – B: Bi-predicted) and temporal id (TID) depending on picture order count (POC).*

Filter control syntax elements may include one or more (e.g., two) types of information. ALF On/Off flags may be signaled at sequence-, picture-, slice-, and/or CTB-levels. Chroma ALF may be enabled at picture- and/or slice-level if (e.g., only if) Luma ALF is enabled at the corresponding level. Filter usage information may be signaled at picture-, slice-, and/or CTB-level (e.g., if ALF is enabled at that level). Referenced ALF APS IDs may be coded at slice-level or at picture-level (e.g., if all the slices within the picture use the same APSs). Luma component may reference one or more (e.g., up to 7) ALF APSs. Chroma components may reference a (e.g., 1) ALF APS. For a Luma CTB, an index may be signaled. The index may indicate which ALF APS or offline-trained Luma filter set is used. For a Chroma CTB, the index may indicate which filter in the referenced APS is used.

Feature(s) associated with encoder-side processes are provided herein.

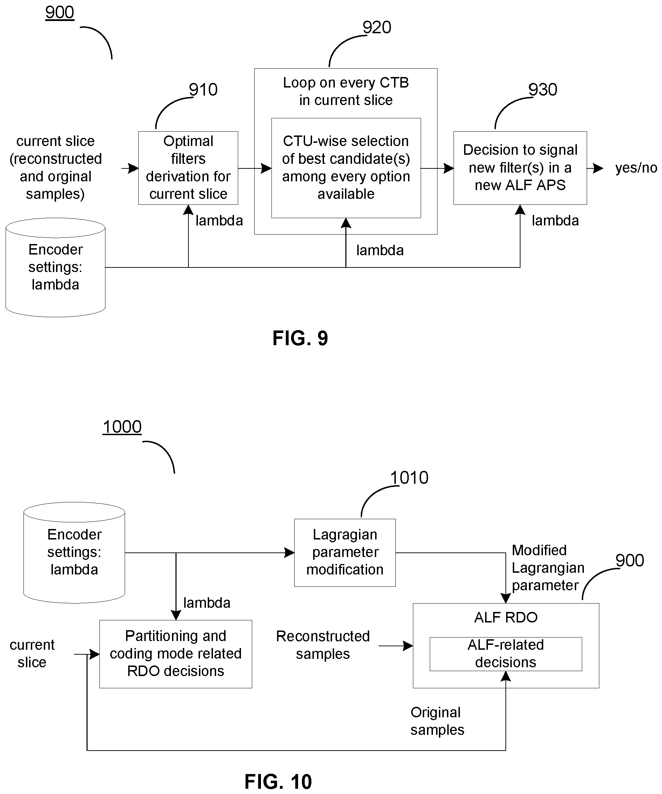

The encoder may calculate value(s) of ALF syntax (e.g., as described herein) by minimizing a rate-distortion cost. The rate-distortion cost may be a weighted sum of the distortion (e.g., measured as the square error between the original samples and the sample after applying the ALF filter) and the number of bits used (e.g., required) to transmit ALF syntax elements. FIG. 9 illustrates a RDO method 900 for deciding to signal or not value(s) of ALF syntax according to an embodiment. In a first step 910, a set of optimal adaptive filters may be derived for instance at slice level. One or more adaptive filters of a set of optimal adaptive filters for a current slice being optimal as minimizing a distortion between original samples of a current slice and samples of a current slice after applying an optimal adaptive filter. For instance, filter coefficients may be calculated by solving a system of Wiener-Hopf equations. The statistics used (e.g., required) to calculate filter coefficients and estimate distortion may be collected for the possible combinations (e.g., all possible combinations) of clipping indices. The statistics may be collected for a CTB (e.g., separately for each CTB). In the case of a Luma component, the statistics may be collected for a class of a CTB (e.g., each class of each CTB). In a step 920, a filter among one of a set of optimal adaptive filters for the current slice, a set of optimal filters for a previous slice (i.e. already known from a decoder from a previous ALF APS) or a set of fixed filters In other words, the encoder decides in 920, for each CTB of the slice whether it is beneficial in terms of RDO to use the optimal filters or if it advantageous to rely on filters of already referenced ALF APSs. For instance, the coding cost in 920 may involve the cost per CTB for syntax signaling of the On/Off ALF flag, the coding cost may also involve the cost per CTB for syntax signaling of a new filer index. In step 930, it's the coding cost of the APS..Based on the outcome of that step 920, for every CTB of the current slice, the encoder may decide in 930 whether to signal the optimal filters in a new APS. For instance 930 enables a transmitting of one or more syntax element representative of an optimal adaptive in-loop filter set for the current slice.

RDO decisions are typically taken following a rate-distortion (RD) criterion C that takes into account both the induced distortion D and the required bitrate R using a Lagrangian multiplier $\lambda$:

$$C = D + \lambda \times R \tag{15}$$

The value of the Lagrangian multiplier used in that RD criterion may for instance depend on the quantization parameter (QP) of the current slice.

In the current development of ALF filtering, ALF filter shapes increase in size. Besides, as the number of coefficients and clipping indices of an ALF filter increases, so does its signaling cost. As a result, the RDO decision to output and signal ALF APS gets less and less likely, impeding the efficiency of ALF as a coding tool.

Accordingly, the present document proposes to favor the signaling of new ALF APSs in comparison with other RDO decisions to be taken by the encoder. According to a particular embodiment, the decision to signal a new ALF APS for current slice/frame is favored by modifying the value of the Lagrangian multiplier for the whole ALF RDO process. Advantageously, such RDO adjustment is also beneficial for the encoding of subsequent slices/frames, since the latest signaled ALF filters may be reused with minimal coding cost.

According to a first embodiment,. the Lagrangian multiplier is modified for the whole ALF RDO process.

According to a second embodiment, The Lagrangian multiplier is modified in specific steps of ALF RDO process and different variants are disclosed depending on combinations of those specific steps.

In a third embodiment it is proposed to modifyi the ALF RDO Lagrangian multiplier under certain coding conditions, e.g. based on temporal frame identifier TID.

Various embodiments are described in the following that may be used in combination or independently.

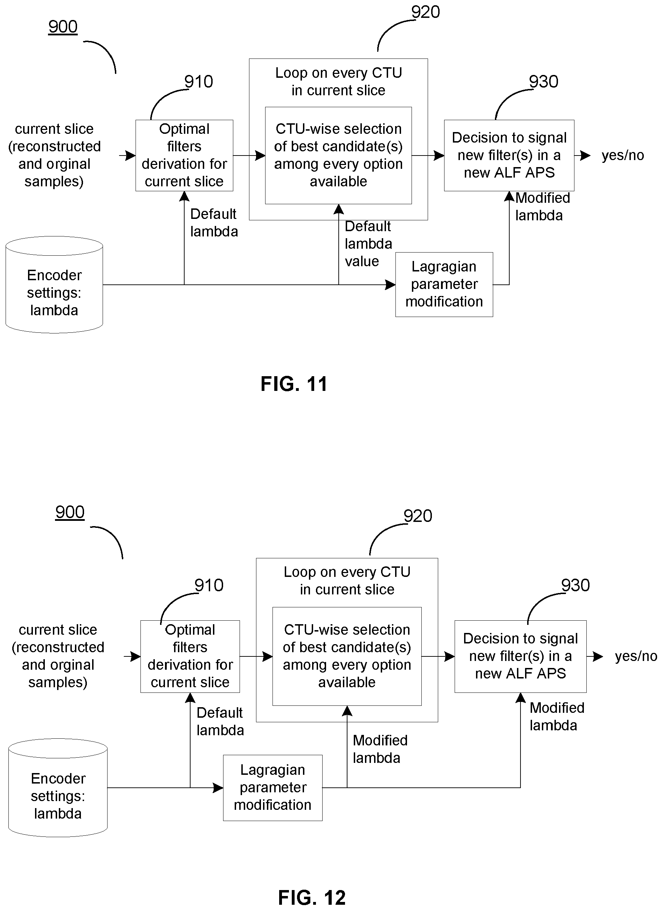

FIG. 10 illustrates a method for video encoding wherein a Lagrangian multiplier is modified for a whole ALF RDO according to an embodiment. The method 1000 of FIG. 10 may be implemented in an encoder of FIG. 2. FIG. 11, FIG.12, FIG. 13 and FIG. 14 illustrate a method for video encoding wherein a Lagrangian multiplier is modified for one or more steps of ALF RDO according to various embodiments. The method 900 of any of FIG. 11, FIG.12, FIG. 13 and FIG. 14 may be implemented in an encoder of FIG. 2.

According to a particular feature, a multiplier coefficient, also referred to as a multiplier parameter in the following, $\mu_{ALF} > 0$ may be introduced and used in the following manner:

$$\lambda_{ALF} = \mu_{ALF} \times \lambda \qquad\qquad (16)$$

where $\lambda_{ALF}$ denotes a Lagrangian multiplier that is used specifically within ALF RDO process and where $\lambda$ stands for a regular, default Lagrangian multiplier value, that may depend e.g. on the slice QP.

According to different variant and following Equations (15) and (16), a value $\mu_{ALF} = 1$ may not impact ALF RDO with respect to current art; a value $\mu_{ALF} < 1$ may underestimate ALF coding cost with respect to the induced distortion; and a value $\mu_{ALF} > 1$ may magnify ALF coding cost with respect to the induced distortion.

In a variant, the one or more multiplier parameters for ALF RDO may belong to the range of [0;1]. As an example, the one or more multiplier parameters for ALF RDO may take one of the following values: 0.5; 0.7; 0.75; 0.8; 0.99.

In another variant, the one or more multiplier parameters for ALF RDO may take a value greater than 1.

According to a first embodiment, the Lagrangian multiplier is modified for the whole ALF RDO process. In the first embodiment, ALF RDO may use a modified Lagrangian multiplier with respect to other RDO decisions occurring at encoding stage, such as CTU partitioning and coding mode decisions, as shown in FIG. 10. In a variant, the default Lagrangian parameter may be multiplied by a positive factor that is lower than one. In another variant, the default Lagrangian parameter is multiplied by a factor that is greater than one.

According to a second embodiment, the Lagrangian multiplier is modified in specific steps of ALF RDO process and different variants are disclosed herein. FIG. 11, FIG.12, FIG. 13 and FIG. 14 illustrate a method for video encoding wherein a Lagrangian multiplier is modified for one or more steps of ALF RDO according to various embodiments.

In a first variant embodiment illustrated on FIG. 11, a Lagrangian multiplier is modified for ALF APS generation. For instance, a multiplier coefficient may be applied to a Lagrangian parameter used in the step enabling 930 a transmitting of one or more syntax element representative of an optimal adaptive in-loop filter set for a current slice, the multiplier coefficient is in a range [0-1] to decrease a cost for transmitting of one or more syntax element representative of an adaptive in-loop filtering mode. As shown on FIG. 11, in the first variant embodiment, both the step of deriving optimal ALF filter based on current slice/frame statistics and the loop of ALF CTU-wise decisions may be performed using regular, default lambda value, that depends e.g. on the slice QP. Only the last step, that consists in deciding whether a new ALF APS should be generated for current slice/frame, may use a modified Lagrangian parameter. This embodiment combines advantageously a derivation of optimal filters similar to current art with only the APS decision that may be affected by the underestimation (or overestimation, depending on the value of $\mu_{ALF}$) of its signalling cost.

As in described above, in a variant, the default Lagrangian parameter is multiplied by a positive factor that is lower than one. In another variant, the default Lagrangian parameter is multiplied by a factor that is greater than one.

In a second variant embodiment illustrated on FIG. 12, a Lagrangian multiplier is modified for CTU loop and ALF APS generation. For instance, a multiplier coefficient is applied to a Lagrangian parameter used in the step 930 for enabling a transmitting of one or more syntax element representative of an optimal adaptive in-loop filter set for a current slice and wherein the multiplier coefficient is applied to the step 920 for selecting for a current block of an image a filter. In the variant of FIG. 12, the step 910 of deriving optimal ALF filter based on current slice/frame statistics is performed using regular, default lambda value, that depends e.g. on the slice QP, and the remaining RDO steps, namely the loop on CTUs and the decision to generate a new ALF APS, use a modified Lagrangian parameter. As previously detailed, in a variant, the default Lagrangian parameter is multiplied by a positive factor that is lower than one. In another variant, the default Lagrangian parameter is multiplied by a factor that is greater than one. In a variant, both the CTU loop and the APS decision may use a same modified lambda value. In another variant, the CTU loop may use a first modified lambda value and the APS decision may use a second modified lambda value. In the variant of this embodiment where a single modified lambda is used, both local CTU-wise decisions and the APS decision are advantageously taken consistently, taking into account both the coding cost of the potential new ALF APS and ALF control signaling cost in every CTU.

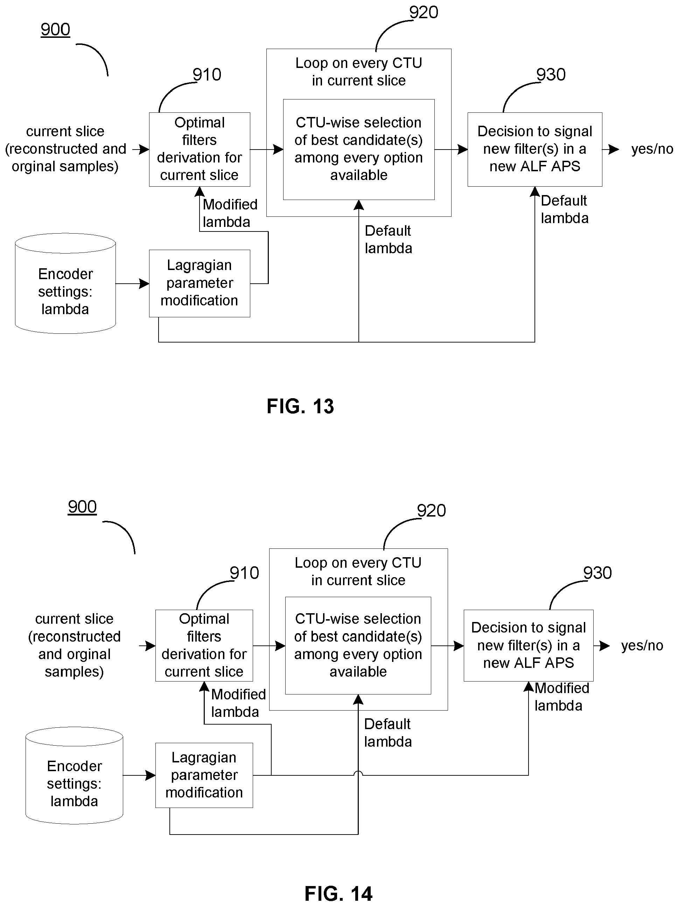

In a third variant embodiment illustrated on FIG. 13, a Lagrangian multiplier is modified for optimal filter derivation. For instance, a multiplier coefficient may be applied to the step 910 for deriving a set of optimal adaptive filters for a current slice. In the variant of FIG. 13, only the optimal filter derivation from current slice/frame statistics may be performed using a modified Lagrangian parameter. As in previous embodiments, in a variant, the default Lagrangian parameter may be multiplied by a positive factor that is lower than one. In another variant, the default Lagrangian parameter is multiplied by a factor that is greater than one. In the variant of this embodiment, only the step of optimal filter derivation is advantageously modified so that encoder options consist in larger ALF filter sets in comparison with current encoder design, thus leveraging potential ALF performances.

In a fourth variant embodiment illustrated on FIG. 14, a Lagrangian multiplier is modified for both optimal filter derivation and APS generation. For instance, a multiplier coefficient may be applied to a Lagrangian parameter used in the step 930 for enabling a transmitting of one or more syntax element representative of an optimal adaptive in-loop filter set for a current slice and wherein the multiplier coefficient may be applied to the step 910 for deriving a set of optimal adaptive filters for a current slice. In this variant, the CTU loop may use a regular, default lambda value, that depends e.g. on the slice QP. As in previous variants, the default Lagrangian parameter may be multiplied by a positive factor that is lower than one. In another variant, the default Lagrangian parameter may be multiplied by a factor that is greater than one. In a variant, both the optimal filer derivation and the APS decision may use the same modified lambda value. In another variant, the optimal filter derivation may use a first modified lambda value and the APS decision may use a second modified lambda value. In the variant where a single decreased value of lambda is used, both filter derivation and the APS decision are advantageously taken consistently, considering the same underestimated coding cost of new ALF filters, favoring the decision of signaling large ALF filters in the bitstream. This modified RDO is beneficial for subsequent slices/frames, that can use potentially more efficient ALF filter sets at a minimal cost.

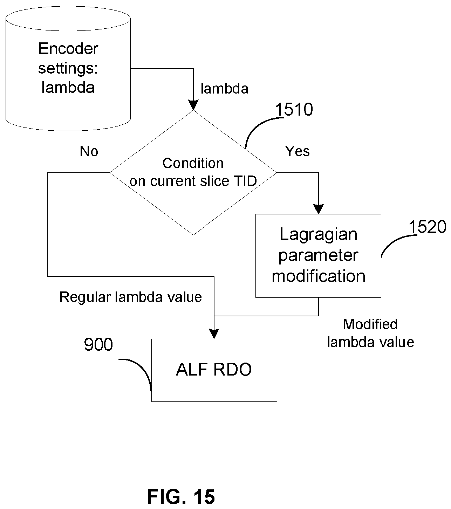

According to a third embodiment, the ALF RDO Lagrangian multiplier is modified under certain coding conditions, e.g. based on temporal frame identifier TID. FIG. 15 illustrates a method for video encoding wherein a Lagrangian multiplier is modified for ALF RDO depending on some constraints to various embodiments. For instance, in a variant, the condition is on the temporal ID (TID) of the current slice, as illustrated on FIG. 15..Non-limiting examples of conditions on the temporal ID are as follows :

- Is the TID of the current slice equal to a given value?
- Is the TID of the current slice lower than a given threshold?
- Is the TID of the current slice greater than a given threshold?
- Is the TID of the current slice within a given range?
- Is the TID of the current slice outside a given range?

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and VVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

**Claims**

1. A method for video encoding, the method comprising:

   determining a set of coding modes for encoding video image data based on a Lagrangian rate-distortion cost using a Lagrangian parameter;
   responsive to the determining the set of coding modes, encoding video image data and related syntax; and
   wherein the set of coding modes comprises an adaptive in-loop filtering mode and wherein determining an adaptive in-loop filtering mode based on a Lagrangian rate-distortion cost using a Lagrangian parameter further comprises modifying a Lagrangian parameter for determining the adaptive in-loop filtering mode.

2. The method of claim 1 further wherein determining an adaptive in-loop filtering mode based on a Lagrangian rate-distortion cost using a Lagrangian parameter further comprises :

   deriving a set of optimal adaptive filters for a current slice, an optimal adaptive filter minimizing a distortion between original samples of a current slice and samples of a current slice after applying an optimal adaptive filter;
   selecting for a current block of an image, a filter set among a set of optimal adaptive filters for the current slice, a set of optimal filters for a previous slice or a set of fixed filters;
   enabling a transmitting of one or more syntax element representative of a set of optimal adaptive filters for a current slice; and
   wherein at least one of a Lagrangian parameter used in a step for deriving, or for the selecting or for enabling a transmitting is modified.

3. The method of any one of claims 1 or 2, wherein a Lagrangian rate-distortion cost for determining the adaptive in-loop filtering mode comprises a weighted sum of a distortion and a number of bits used to transmit one or more syntax element representative of a set of optimal adaptive filters for a current slice.

4. The method of claim 3, wherein a distortion is measured as a square error between original samples of a current slice and samples of a current slice after applying an optimal adaptive filter.

5. The method of any one of claims 2-4, wherein a multiplier coefficient is applied to at least one of a Lagrangian parameter used in a step for deriving, or for the selecting or for enabling a transmitting is modified, the multiplier coefficient is in a range [0-1] .

6. The method of any one of claims 2-4, wherein a multiplier coefficient is applied to a Lagrangian parameter used in the step enabling a transmitting of one or more syntax element representative of a set of optimal adaptive filters for a current slice, the multiplier coefficient is in a range [0-1] to decrease a cost for transmitting of one or more syntax element representative of a set of optimal adaptive filters.

7. The method of any one of claims 2-4, wherein a multiplier coefficient is applied to a Lagrangian parameter used in the step for enabling a transmitting of one or more syntax element representative of a set of optimal adaptive filters for a current slice and wherein the multiplier coefficient is applied to the step for selecting for a current block of an image a filter, the multiplier coefficient is in a range [0-1].

8. The method of any one of claims 2-4, wherein a multiplier coefficient is applied to the step for deriving a set of optimal adaptive filters for a current slice, the multiplier coefficient being in a range [0-1] .

9. The method of any one of claims 2-4, wherein a multiplier coefficient is applied to a Lagrangian parameter used in the step for enabling a transmitting of one or more syntax element representative of a set of optimal adaptive filters for a current slice and wherein the multiplier coefficient is applied to the step for deriving a set of optimal adaptive filters for a current slice, the multiplier coefficient is in a range [0-1].

**10.** The method of any one of claims 2-9, wherein comprises modifying a Lagrangian parameter for determining the adaptive in-loop filtering mode is responsive to a value of a temporal identifier of a current slice.

**11.** An apparatus, comprising one or more processors, wherein the one or more processors are configured to perform the method of any of claims 1-10.

**12.** A signal comprising video data, formed by performing the method of any one of claims 1-10.

**13.** A computer readable storage medium having stored thereon instructions for video encoding according to the method of any one of claims 1-10.

**FIG. 1**

FIG. 2

FIG. 3

Prediction

Residue

+

DBF → SAO → ALF

Reference Picture Buffer

**FIG. 4**

Samples from DBF

SAO    BIF    CCSAO

+

clip

Samples to ALF

**FIG. 5**

| | | 0 | | |
|---|---|---|---|---|
| | 1 | 2 | 3 | |
| 4 | 5 | 6 | 7 | 8 |
| 9 | 10 | 11 | ■ | 11 | 10 | 9 |
| 8 | 7 | 6 | 5 | 4 |
| | 3 | 2 | 1 | |
| | | 0 | | |

| | 0 | |
|---|---|---|
| 1 | 2 | 3 |
| 4 | 5 | ■ | 5 | 4 |
| 3 | 2 | 1 |
| | 0 | |

**FIG. 6**

**FIG. 7**

**FIG. 8**

900

920

910

current slice
(reconstructed
and orginal
samples)

Optimal
filters
derivation for
current slice

Loop on every CTB
in current slice

CTU-wise selection
of best candidate(s)
among every option
available

930

Decision to signal
new filter(s) in a
new ALF APS

yes/no

Encoder
settings:
lambda

lambda

lambda

lambda

**FIG. 9**

1000

1010

Encoder
settings:
lambda

Lagragian
parameter
modification

Modified
Lagrangian
parameter

900

lambda

current
slice

Partitioning and
coding mode related
RDO decisions

Reconstructed
samples

ALF RDO

ALF-related
decisions

Original
samples

**FIG. 10**

900

910

920

930

current slice
(reconstructed
and orginal
samples)

Optimal
filters
derivation for
current slice

Loop on every CTU
in current slice

CTU-wise selection
of best candidate(s)
among every option
available

Decision to signal
new filter(s) in a
new ALF APS

yes/no

Default
lambda

Default
lambda
value

Modified
lambda

Encoder
settings:
lambda

Lagragian
parameter
modification

**FIG. 11**

900

910

920

930

current slice
(reconstructed
and orginal
samples)

Optimal
filters
derivation for
current slice

Loop on every CTU
in current slice

CTU-wise selection
of best candidate(s)
among every option
available

Decision to signal
new filter(s) in a
new ALF APS

yes/no

Default
lambda

Modified
lambda

Modified
lambda

Encoder
settings:
lambda

Lagragian
parameter
modification

**FIG. 12**

900

910

920

Loop on every CTU
in current slice

930

current slice
(reconstructed and
orginal samples)

Optimal
filters
derivation for
current slice

CTU-wise selection
of best candidate(s)
among every option
available

Decision to signal
new filter(s) in a
new ALF APS

yes/no

Modified
lambda

Default
lambda

Default
lambda

Encoder
settings:
lambda

Lagragian
parameter
modification

**FIG. 13**

900

910

920

Loop on every CTU
in current slice

930

current slice
(reconstructed
and orginal
samples)

Optimal
filters
derivation for
current slice

CTU-wise selection
of best candidate(s)
among every option
available

Decision to signal
new filter(s) in a
new ALF APS

yes/no

Modified
lambda

Default
lambda

Modified
lambda

Encoder
settings:
lambda

Lagragian
parameter
modification

**FIG. 14**

**FIG. 15**

Europäisches
Patentamt
European
Patent Office
Office européen
des brevets

## EUROPEAN SEARCH REPORT

**Application Number**

EP 24 30 5567

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/128010 A2 (CANON KK [JP]; LE LEANNEC FABRICE [FR] ET AL.) 6 September 2013 (2013-09-06) | 1,3-13 | INV. H04N19/117 H04N19/147 |
| Y | * figure 25 * <br> * page 3, line 1 - line 12 * <br> * page 65, line 10 - line 15 * <br> * page 103, lines 15-21 * <br> * page 104, line 7 - line 10 * <br> ----- | 2 | H04N19/174 H04N19/176 H04N19/19 H04N19/82 |
| Y | C-Y CHEN ET AL: "CE2.4.2.2: CTB-based ALF with slice filter sets", 123. MPEG MEETING; 20180716 - 20180720; LJUBLJANA; (MOTION PICTURE EXPERT GROUP OR ISO/IEC JTC1/SC29/WG11), , <br> no. m43164 <br> 3 July 2018 (2018-07-03), XP030195812, Retrieved from the Internet: URL:http://phenix.int-evry.fr/mpeg/doc_end _user/documents/123_Ljubljana/wg11/m43164- JVET-K0235-v1-JVET-K0235-v1.zip JVET-K0235-v1.docx [retrieved on 2018-07-03] | 2 | |
| A | * abstract * <br> ----- | 1,3-13 | **TECHNICAL FIELDS SEARCHED (IPC)** <br> H04N |

The present search report has been drawn up for all claims

| Place of search | Date of completion of the search | Examiner |
|---|---|---|
| The Hague | 10 September 2024 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5567

This annex lists the patent family members relating to the patent documents cited in  the above-mentioned European search report.
The members are as contained in the European Patent Office EDP file on
The European Patent Office is in no way liable for these particulars which are merely given for the purpose of information.

10-09-2024

| Patent document cited in search report | Publication date | Patent family member(s) | Publication date |
|---|---|---|---|
| WO 2013128010    A2 | 06-09-2013 | NONE | |